# EUROPEAN PATENT APPLICATION

(11) **EP 3 926 207 A1**
(43) Date of publication of application: **22.12.2021**
(21) Application number: 20000217.8
(22) Date of filing: 16.06.2020
(51) Int. Cl.: F16H 3/089, F16H 3/10

(54) **POWER TRANSMISSION SYSTEM WITH AT LEAST ONE DIVIDED FREEWHEEL GEAR**

(71) Applicant: Kontopoulos, Leonidas Kyros, 60596 Frankfurt am Main (DE); Kontopoulos, Kyros Filippos, 60596 Frankfurt am Main (DE)
(72) Inventor: KONTOPOULOS, Konstantinos, 60596 Frankfurt am Main (DE); KONTOPOULOS, Grigorios-Maximilian, 60596 Frankfurt am Main (DE)

(57) **Abstract**

The present invention relates to the field of power transmission systems and in particular to a divided freewheel gear for a power transmission system, to a power transmission system, to a method to operate a power transmission system and to a vehicle or a device comprising a divided freewheel gear.

## Description

### Technical field

The present application relates to the field of power transmission systems and in particular to a power transmission system which comprise divided freewheel gears, to a method to operate a power transmission system and to an automotive vehicle comprising a power transmission system.

### Technical background

Power transmission systems (e.g. gearboxes) are adapted by known automotive vehicles, such as trucks, cars, motorbikes or the like, in order to provide a range of speed and torque outputs, which are necessary during the movement of the vehicle. Bicycles nowadays also comprise power transmission systems. Many devices are also using power transmission systems.

Power transmission systems adapt the output of the engine of the vehicle to the wheels.

As it is known engine may rotate in a relative high rotational speed compared to the wheels which is not suitable for starting, stopping, and slower travel of the vehicle.

This is where power transmission system play its role, decreasing higher engine speed to the slower wheel speed, increasing torque in progress and vice versa.

In addition internal combustion engines have an uneven distribution of torque and power outputs across the rev range.

Commonly the greatest torque is required when the vehicle moves with low speed, while the maximum power is needed in higher speed.

Again here is where power transmission systems are adapted in order to provide high torque at lower speed but also operate the engine within its limits at high speeds.

In our days, gearboxes are also used in electric vehicles (e.v.) in order to improve their performance and efficiency.

In common days, gearboxes have several gears/gear ratios in order to cover a wide range of torque and/or rotation speed.

Modern vehicles adapt gearboxes with multiple gears in order to operate to achieve goals such as maximum torque, maximum power, optimal efficiency and minimize the gear changing time.

Those systems do not continuously transfer power to the wheels. In addition those which do transfer power continuously suffer from energy losses.

The presentation of the current innovation at least partly overcomes the previously mentioned drawbacks of the current systems. In particular, the power transmission system presented, allows for smooth and continuous power transferring while shifting gear ratios.

### Summary of the invention

The previously mentioned drawback are at least partly solved by divided freewheel gear according to claims 1 to 4 a power transmission system according to claims 5 to 7 and a method to operate a power transmission system according to claim 8 and a vehicle according to claim 9.

In particular, the objects are at least partly achieved by the use of at least one engageable divided freewheel gear per gear ratio and at least one engagement component assigned to each engageable divided freewheel gear of the gear ratio.

A divided freewheel gear is consisted by an inner part and at least one outer part wherein the parts are at least partially arranged the one within the other.

At least one of the outer parts or the inner part comprise a freewheel portion.

The inner part and the at least one outer part have a common rotational axis and the parts consisting the divided freewheel gear are coupled by means of at least one elastic element.

Preferably the inner part and the at least one outer part are coupled by means of at least one first elastic element and at least one second elastic element, wherein the spring constant of the at least one first elastic element is lower than the spring constant of the at least one second elastic element.

The elastic elements can for example be spring elements or rubber elements or any other type of of suitable elastic elements.

In addition the at least one first elastic element is longer in relation to the at least one second elastic element and as a result, the at least one second elastic element deforms after a certain deformation of the at least one first elastic element.

The elastic elements are positioned in a parallel configuration in relation to each other, and are received in at least one elastic element compartment formed by the inner and the at least one outer part.

The parts consisting the divided freewheel gear, are arranged angularly deflectable with respect to each other around the common rotational axis, and rotate with the same angular velocity when the elastic elements are fully loaded under the occurring load.

The external outer part comprises gear teeth for torque transmission to another gear wheel.

The divided freewheel gear rotates free on assign shaft when is not engaged with the assign shaft.

The divided freewheel gear is engageable to the assigned shaft by an engagement component that can be a dog clutch type or any other suitable engagement component.

Therefore the inner part of the divided freewheel gear comprises engagement means on one of its surfaces.

By providing at least one first elastic element as being longer in relation to the at least one second elastic element and as having a lower spring constant in relation to the spring constant of the at least one second elastic element, a smooth engagement can be achieved and the necessary time in order this engagement to be completed is provided.

As the angular deflection of the parts progresses, the at least one second elastic element will be eventually compressed, transferring the significant amount of the occurring load.

Therefore the at least one first elastic element has a different and distinct role in comparison to the role of the second elastic element.

The at least one first elastic element assures that the parts of the divided freewheel gear will remain in a neutral position no matter if the divided freewheel gear accelerates, decelerates or rotates with a constant angular velocity.

Elastic elements with damping characteristics may be used or the divided freewheel gear may comprise dumping elements.

Alternatively an engagement component can have an almost identical configuration to the previously described divided freewheel gear.

The main difference in comparison to the previously described configuration of the divided freewheel gear, is that the external outer part comprises engagement means in order to engage with another gear wheel instead of gear teeth , that is connected to assign shaft with a rotational fix manner and is axially movable to assign shaft.

The power transmission system, comprise an input shaft which supports gear wheels and an output shaft which support free to rotate on the assigned shaft divided freewheel gears.

The divided freewheel gears are engageable with the output shaft by an engagement component.

The engagement component may be a dog clutch .

The gears of the input shaft are meshed with the assigned gears of output shaft forming a gear ratio.

Each set of gear wheels forming a gear ratio comprise at least one free to rotate divided freewheel gear which is engageable with the shaft with the help of the engagement component (e.g. dog clutch).

Further, at least one engagement component is assigned per gear ratio.

The input shaft can be powered by an engine and the output shaft can power the wheels of an automotive vehicle.

A gear ratio is formed by two gear wheels, wherein a first gear wheel can be a fixed gear wheel, i.e. permanently engaged with the input shaft, and the second gear wheel is a free to rotate divided freewheel gear, assigned to output shaft , i.e. adapted to be temporarily engaged with the shaft with the help of an engagement component.

The torque transmission can be achieved only when the engagement component , which is torque proof engaged with the assigned shaft , is engaged with the free to rotate divided freewheel gear , and only when the assign to the divided freewheel gear shaft , does not rotate faster than the divided freewheel gear.

In an initial state, the power transmission system may operate with a first gear ratio selected, with the help of a clutch. Apart from the initial state where a clutch is needed, all of the other gear ratio changing actions may take place with an absence of a clutch engagement / disengagement.

Accordingly, power is transferred from the input shaft to the output shaft by means of a first pair of gear wheels that define the first gear ratio. A second gear ratio can be defined by a second pair of gear wheels.

When a gear changing action, from the first to the second gear ratio, has completed, the first pair of gear wheels must not transfer power to the output shaft and the second pair of gear wheels must be engaged, transferring power.

The engagement is achieved by means of an engagement component that is assigned to the free to rotate divided freewheel gear of the second pair of gear wheels. A different engagement component is assigned to the free to rotate divided freewheel gear of the first gear ratio.

The engagement component, by which the divided freewheel gear of the second gear ratio will be engaged with, rotates with an angular velocity (the same as the velocity of the assigned shaft since it is connected with the assigned shaft in a rotational fix manner), that is different from the angular velocity of the free to rotate freewheel gear that is going to be engaged (the angular velocity of the free to rotate freewheel gear of a next gear ratio is bigger than the angular velocity of assign shaft because every next gear ratio is smaller than every previews gear ratio).

A shifting mechanism pushes or pulls linearly the engagement component (assigned to a next gear ratio) in order to be engaged with the desired free to rotate divided freewheel gear which rotates freely.

When the engagement component is engaged with the desired free to rotate divided freewheel gear of the output shaft of the second gear ratio (or any next gear ratio), the divided freewheel gear of the second gear ratio decelerates and progressively will rotate with the same angular velocity as the output shaft, the gear wheel of the second gear ratio that is assigned to the input shaft , progressively will rotate with smaller angular velocity in comparison to its previous angular velocity (since, in up shifting , the next gear ratio is smaller than the previous gear ratio) and the input shaft will b rotate with the same, smaller angular velocity as well.

With the same smaller angular velocity, the gear wheel of the first gear ratio that is assigned to the input shaft will rotate as well.

The divided freewheel gear of the first gear ratio assigned to the output shaft will progressively rotate in a smaller angular velocity than the angular velocity of assign output shaft.

But the freewheel portion of the divided freewheel gear rotates freely without transferring torque since the shaft will rotate with bigger angular velocity than the angular velocity of assign divided freewheel gear(by definition freewheel gears engage in one direction).

The gear changing action has been completed and power is transferred from engine to wheels by second gear ratio.

As a person skilled in the arts understands the up shifting gear changing action occurs with continuous power transfer.

Now engagement component assign to divided freewheel gear of first gear ratio can disengage from assign divided freewheel gear.

The power transmission may further comprise a control unit, position sensors and measuring instruments taking according measurements and providing them to the control unit, wherein the control unit is adapted to command a gear ratio changing action with the provision of respective commands to the at least one engagement component after assessing and processing the provided data.

In this exemplary configuration in order to downshift a simultaneous power cut is commanded (from CPU), the second gear ratio is disengaged and the first gear ratio is engaged.

Divided freewheel gears, are used instead of freewheel gears, for avoiding torque shocks while the engagement component engages with the free to rotate gear wheel.

As a person skilled in the arts understands if the angular velocity of output shaft is small , the divided freewheel gears may comprise only one elastic element or even an elastic element with variable spring constant when the torque that will be transferred is small.

As a person skilled in the art understands, that a power transmission system that comprises a divided freewheel gear as engagement component, and the gear wheels of each gear ratio are free to rotate on assign shafts engeagable gear wheels , has an analogous layout to the previously described .

### Description of preferred embodiments

In the following, preferred embodiments of the present invention are described with respect to the accompanying figures:
- Figure 1: gives a schematic illustration of individual components of a transmission element;
- Figure 2: gives a schematic illustration of individual components of a power transmission system;
- Figure 3: gives a schematic illustration of a power transmission system;
- Figure 4 to 5: give a schematic illustration of a gear ratio changing action sequence;
- Figure 6: give a schematic illustration of individual components of a power transmission system;
- Figure 7: gives a schematic illustration of individual components of a transmission element;
- Figure 8: gives a schematic cut view of a power transmission system;
- Figure 9: gives a schematic cut view of a transmission element;
- Figure 10: gives a schematic cut view of a power transmission system.

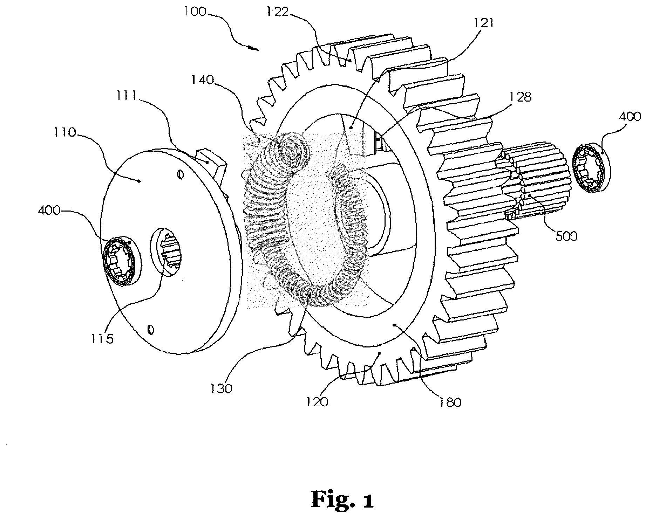

Figure 1 presents individual parts of a transmission element.

The presented transmission element 100 is a divided freewheel gear which is provided as being engageable by an engagement component.

As can be seen the divided freewheel gear comprises an inner part 110, and an outer part wherein the outer part comprises a freewheel portion and more specifically an inner ring 180 and an outer ring 120.

By definition since the outer part comprises a freewheel portion, the torque can be transferred only in one direction of rotation (definition of a freewheel gear). Freewheel rotates free when assign shaft rotates faster than freewheel

The inner part 110 and the outer part (and more specifically the inner ring 180 of the outer part) are connected with help of at least one first and at least one second elastic elements.

The at least one first elastic element 130 is provided as a longer elastic element having a lower spring constant in comparison to the at least one second elastic element 140 which is provided as a shorter elastic element having a greater spring constant.

Furthermore in this exemplary configuration the parallel configuration of the elastic elements can be seen . In this exemplary configuration the second elastic element is provided with an increased diameter in comparison to the diameter of the first elastic element, and the first elastic element is positioned "within" the second elastic element.

Other configuration of the elastic elements are possible but in any case the proposed configuration of the elastic elements will allow an initial deformation of the first elastic element when the connected parts are angularly deflected, with the deformation of the second elastic element following as the angular deflection progresses.

In addition in the presented exemplary configuration, the elastic elements are housed within a single elastic element compartment. As previously said each the elastic elements can be housed in different elastic element compartments always obeying the principles of the innovation.

The elastic element compartment of this configuration is created by the positioning of the inner part 110 and the inner ring 180.

Therefore the elastic elements 130, 140 are received between the inner elastic element support 111 and the outer elastic element support 121.

As can be seen, the outer elastic element support 121 may also provide dumping elements 128 that sooth the recoil of the parts when the inner part stops being engaged and a preloaded first elastic element is selected.

The engagement of the inner part 110 takes place with the provision of the engagement means 115 on the inner circumferential surface of the inner part 110.

The engagement means 115 are provided in order to interact with the provided engagement means of an engagement component.

Since the outer part comprises a freewheel portion (outer ring 120 and inner ring 180), the outer ring 120 comprises gear teeth 122 in order to mesh with another gear wheel.

Inner bearings 400 and outer bearing 500 are provided in order to assist the angular motion between the parts.

Inner bearing 400 are provided on each face of the inner part 110 and between the inner part 110 and the assigned shaft and outer bearing 500 is provided between the inner part 110 and the inner ring 180 of the freewheel.

As it is well known the outer part which comprises a freewheel portion also comprises bearings but those are not visible in this portrayal.

As a person skill in the arts understand the above described configuration is exemplary and the divided freewheel gear could comprise a freewheel portion in inner part of the divided freewheel gear instead of its outer part .

As a person skill in the arts understand the above described configuration is exemplary and elastic elements with damping characteristics can be used .

As it is obvious, in those cases the operation is exactly analogous.

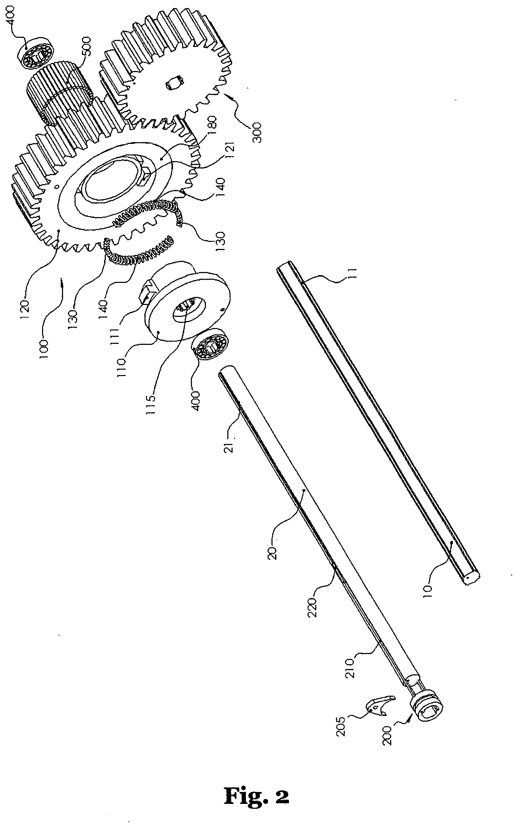

In figure 2 an exemplary power transmission system with one gear ratio , comprising a divided freewheel gear meshed with a gear wheel and an engagement component can be seen.

The presented power transmission system depicts only one gear ratio but it is obvious that more can be added with an analogous layout.

The gear ratio is consisted by an engageable, free to rotate when not being engaged, divided freewheel gear and a gear wheel.

The transmission element 100 is provided as a divided freewheel gear, meshing with the provided gear wheel 300 and therefore define a gear ratio.

The engagement of the divided freewheel gear with the shaft takes place with the provision of the engagement component 200.

The engagement component 200 comprises arms 210 which have engagement means 220 on their distant end.

The engagement means 220 interact with the engagement means 115 of the inner part 110, and may torque proof fix the inner part 110 with the engagement component 200.

Since the engagement component 200 is torque proof fixed to the assigned shaft, the inner part 110 may also be torque proof fixed to the assigned shaft upon engagement with the engagement component 200.

In order to engage different divided freewheel gears, the engagement component 200 is configured axially movable along the assigned shaft.

The axial movement of the engagement component 200 is achieved with the provision of an actuator coupling member 205, which is axially fixed to the engagement component but it is not torque proof fixed (i.e. the two move axially together as a unity but they do not rotate as a one).

In this exemplary configuration, one engagement component 200 is assigned to multiple engageable divided freewheel gears. It is going without saying that each engageable divided freewheel gear can have a single engagement component assigned.

The presented divided freewheel gear is similar to the one presented in the previous figure but the presented one comprises two sets of two elastic elements with a corresponding formation of the inner part 110 and the inner ring 180.

The divided freewheel gear is supported by the output shaft 20 and the gear wheel 300 that meshes with the outer ring 120 is supported by the input shaft 10 which provides engagement means 11 in order to torque proof fix the gear wheel 300.

As it is obvious, the divided freewheel gears do not necessarily have to be assigned to an output shaft.

Furthermore in this configuration only one divided freewheel gear per gear ratio is selected. This is not restrictive since both the gears consisting a gear ratio can be divided freewheel gears.

In addition only one gear wheel per gear ratio is provided as being engageable. Again this is not restrictive since both of the gears consisting a gear ratio can be engageable.

The output shaft 20 also comprises engagement means / guiding means 21 that engage (and at the same time guide) the engagement component 200 with the output shaft 20.

In the presented configuration the guiding means 21 of the output shaft 20 are presented as recesses and as linear guiding means, but their shape and form can vary, with an analogous change in the engagement component 200.

In addition since the engagement means of the inner part 110 are provided on the inner circumferential surface of the part, the bearings 400 comprise recesses on their inner ring in order to permit the entrance of engagement component, for torque proof fixing the inner part 110 with assign shaft.

The engagement means 115 of the inner part 110 are provided as recesses, and the engagement means 220 of the engagement component 200 as protrusions but this is not restrictive and any suitable form of engagement means (either by shape, form or number) can be selected.

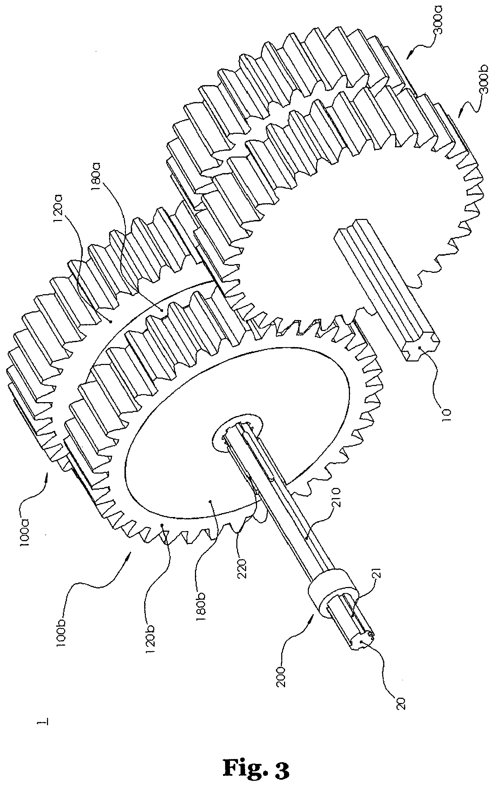

Figure 3 presents an exemplary power transmission system (for example of an EV) which comprises two gear ratios , with each gear ratio being consisted by one divided freewheel gear and one gear wheel, with the divided freewheel gears being engaged by a single engagement component.

Its without saying that one different engagement component may assign to each divided freewheel gear.

As can be seen the layout is similar to the one presented in the previous picture with the input shaft 10 supporting gear wheels 300a, 300b which are torque proof connected to the shaft and the output shaft 20 supports the engageable divided freewheel gears 100a, 100b being engaged by the provided engagement component 200.

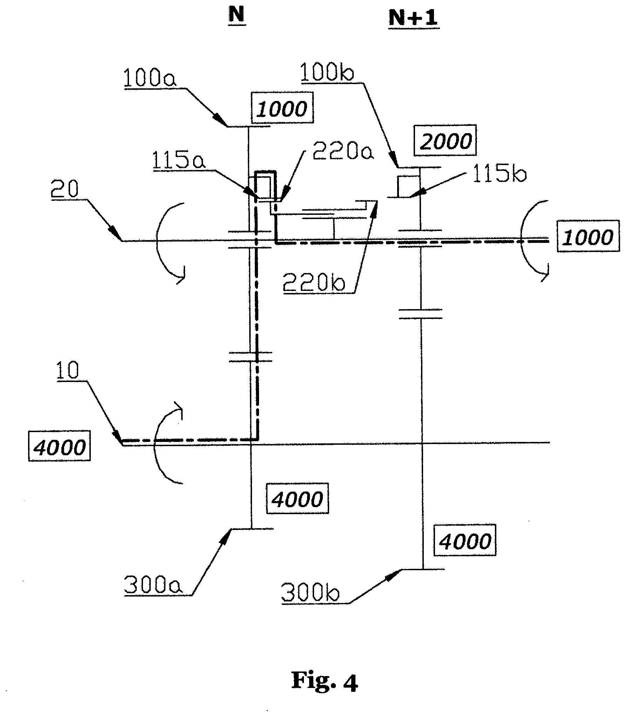

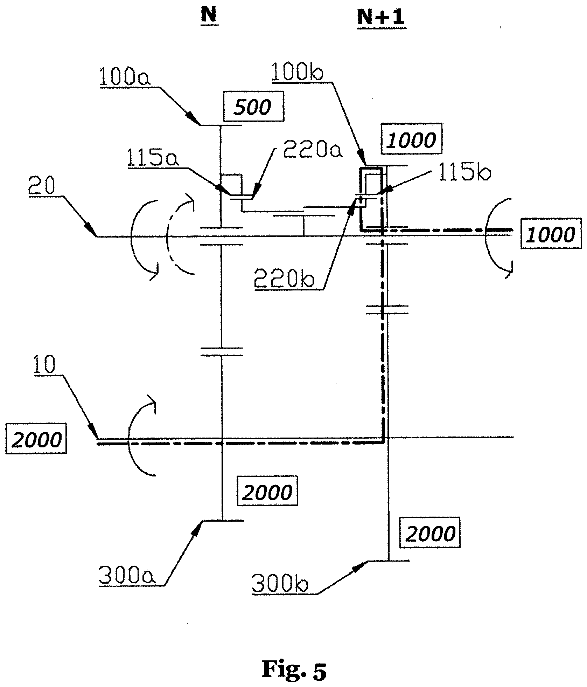

Figure 4 and figure 5 show a gear changing action of a power transmission system that comprises a gear ratio formed by an engageable divided freewheel gear and a gear wheel, and each engageable divided freewheel gear has a single engagement component assigned. The presented power transmission system is for example adopted in an automotive vehicle and therefore the input comes from the engine and the output is to the wheels.

In this schematic representation, input shaft 10 supports gear wheels 300a, 300b and output shaft 20 supports engageable divided freewheel gears 100a, 100b.

The divided freewheel gears 100a, 100b rotate freely when they rotate with a smaller angular velocity in comparison to the angular velocity of the assigned shaft.

Gear ratio "N' is formed by the engageable divided freewheel gear 100a which meshes with gear wheel 300a and gear ratio "N+1" is formed by the engageable divided freewheel gear 100b which meshes with gear wheel 300b.

The engagement component which is positioned in between the two gear ratios comprises engagement ring which comprises engagement means 220a assigned to the engageable divided freewheel gear 100a, interacting with the provided engagement means 115a of the engageable freewheel gear 100a. Engagement means 220b are assigned to the engageable divided freewheel gear 100b, interacting with the provided engagement means 115b of the engageable freewheel gear 100b.

In figure 4 the power is delivered from the engine to the wheels via gear ratio "N".

Exemplary numbers for rotational speeds and gear ratios are used.

In this exemplary configuration the gear wheels 300 of the input shaft 10 are connected with the input shaft 10 in a rotational fixed manner.

The engageable, free to rotate on shaft when not being engaged, divided freewheel gears 100 are assigned to output shaft 20.

The engagement component in between the presented gear ratios, is connected with the output shaft 20 in a rotational fixed manner and is assigned to the engageable divided freewheel gears 100.

When the engagement means 220 of the engagement ring of the engagement component interact with the engagement means 115 of the engageable divided freewheel gear 100, said inner part of the engageable divided freewheel gear 100 is torque proof fixed to the assigned shaft and therefore the gear ratio comprising said divided freewheel gear is selected.

Since the engagement means 220a interact with the engagement means 115a, gear ratio "N" is selected and the power is transferred from engine to the wheels through gear ratio "N".

Input shaft rotates with 4000 rpm and output shaft rotates with 1000rpm.

The arrows designed with a continuous line on the shafts indicate the direction of rotation of the shafts.

The bold dash dotted line, indicate the power flow.

Both gear wheels 300a, 300b assign to input shaft 10 rotate with 4000rpm (are connected to the input shaft in a rotational fix manner).

The engageable divided freewheel gear 100a of the output shaft 20 rotate with 1000rpm (gear ratio n, 4:1) and the engageable divided freewheel gear 100b of the output shaft 20 rotate with 2000rpm (gear ratio n+1 , 2:1).

When a gear changing action is commanded, an actuator moves linearly the desired engagement ring that comprises engagement means 220 either by pulling them or by pushing them.

In order to upshift from gear ratio "N" to gear ratio "N+1", the engagement ring that comprises engagement means 220b have to be moved towards the engageable divided freewheel gear 100b of gear ratio "N+1", in order to torque proof fix said engageable inner part of divided freewheel gear to the output shaft 20.

In figure 5 the engagement of the engagement component (via the engagement means 220b) with the engageable divided freewheel gear 100b of gear ratio "N+1" has been completed and both the engageable divided freewheel gears of gear ratios "N" and "N+1" are connected with the engagement component, via the respective engagement means 220.

Output shaft 20 rotates with 1000rpm and progressively so will do the engageable divided freewheel gear 100b of gear ratio "N+1" which meshes with the gear wheel 300b of gear ratio "N+1" assigned to input shaft 10, which will progressively rotate with 2000rpm.

Since gear wheel 300b of the input shaft 10 is torque proof connected to the input shaft 10, the input shaft 10 will progressively rotate with 2000rpm and so will the gear wheel 300a of gear ratio "N" which is also assigned to input shaft 10 and is connected to the input shaft 10 in a rotationally fixed manner.

The engageable divided freewheel gear 100a of gear ratio "N" of the output shaft 20, will progressively rotate with an absolute angular velocity of 500rpm (gear ratio 4:1)(-500 relative to the shaft, as can be seen by the arrow in the dash-dotted line). But output shaft rotates with 1000rpm .

Freewheel gears by definition engage in one direction of rotation while they rotate freely in the other, not transferring torque.

As we said before the divided freewheel gear rotates freely when shaft rotates faster than freewheel gear.

So freewheel gear of divided freewheel gear 100a of gear ratio "N" rotates freely.

Now the power transfer is through gear ratio "N+1" (dash dotted line) while the engageable divided freewheel gear 100a of the output shaft 20 of the gear ratio "N" not transferring any torque (due to the fact that the shaft rotates faster than divided freewheel gear 100a and freewheel of divided freewheel gear rotates freely).

As a consequence a command for disengagement of the engageable divided freewheel gear 100a of the output shaft 20 of gear ratio "N" can be given.

Therefore it is made clear that a divided freewheel gear can rotate freely, not transferring any torque in the following two scenarios.

The first scenario is that the divided freewheel gear is not engaged to the assigned shaft by an assigned engagement component.

The second scenario is that the divided freewheel gear is engaged to the assigned shaft by an assigned engagement component, but the shaft rotates faster in comparison to the divided freewheel gear and so the freewheel which is comprised in inner or outer part rotates free.

As a person skilled in the art understands the up shifting gear changing action occurs while a continuous power transfer from the engine to the wheels is achieved.

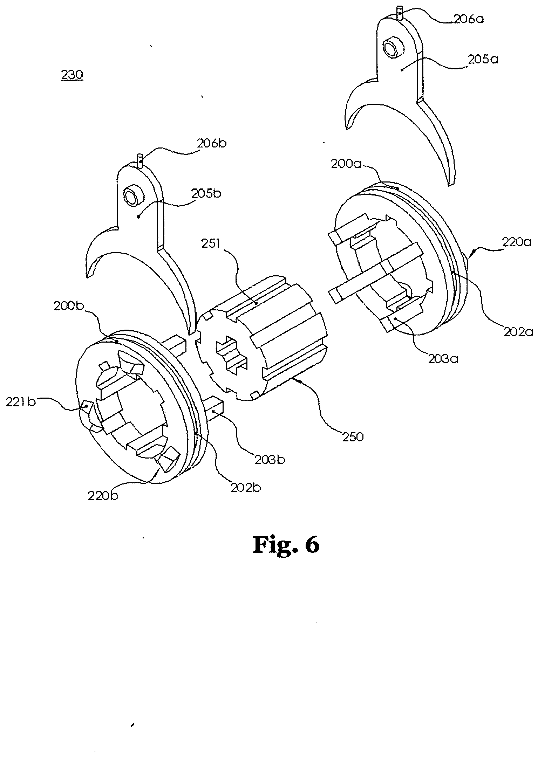

Figure 6 shows an exemplary configuration 230 (dog clutch) for selecting the desired gear ratio, with respect to the previously presented power transmission systems.

This configuration may for example be included in a power transmission system that comprises engageable divided freewheel gears.

The configuration is torque proof engaged with a shaft and comprises two rings, with each ring assigned to a single engageable divided freewheel gear.

Therefore the hub 250 is torque proof fixed to the assigned shaft and the two rings are configured axially movable but torque proof fixed to the hub 250, in order to select or deselect the desired gear ratio.

The outer circumferential surface of the hub 250, comprises engagement means 251 that torque proof fix the rings with the hub, guiding the rings when they are axially moved.

The engagement means 251 are presented as linear guiding means but as previously mentioned can be helically formed in order to guide the rings in a combined axial and rotational manner.

The inner engagement means 203 of the rings interact the engagement means 251 and as a consequence they must be shaped in relation to the form of the engagement means 251.

The two rings play the role of an engagement component.

Therefore engagement component 200a is assigned to one engageable divided freewheel gear and engagement component 200b to another.

Each of the engagement components 200 (rings), comprises engagement means 220 that interact with the respective engagement means of the assigned engageable divided freewheel gear.

The engagement surfaces 221 are shaped in relation to the corresponding engagement surfaces of the engagement means of the assigned engageable divided freewheel gears.

In order to be axially moved, the rings have a shifting fork coupling 202 that receives the shifting fork 250.

The two are axially moved as an entity but they are not torque proof fixed (i.e. the rings can rotate independently).

A shifting fork protrusion 206 is also visible, by which the axial movement of the shifting fork 250 is achieved.

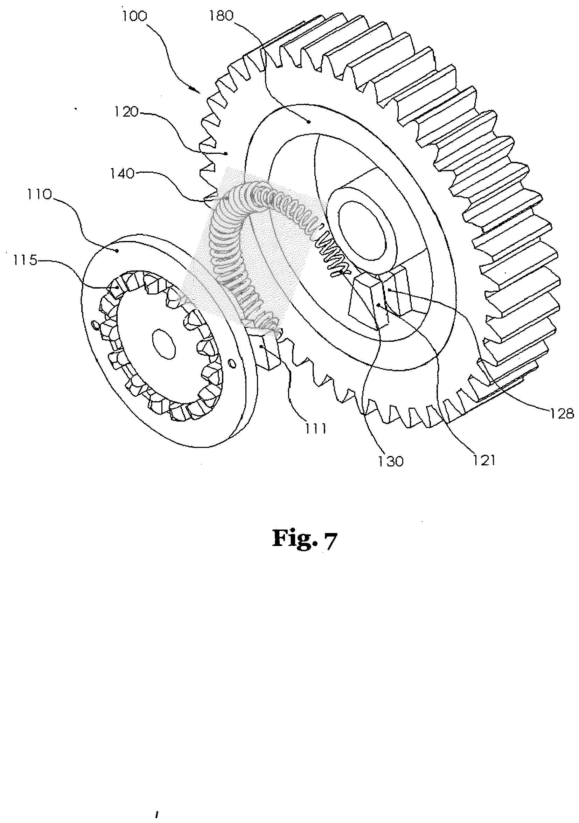

Figure 7 shows an alternative design of the previously described divided freewheel gear.

In this figure the engagement means 115 are provided as a combination of protrusions and cavities and are provided on the front face of the inner part 110 instead of the inner circumferential surface of said part.

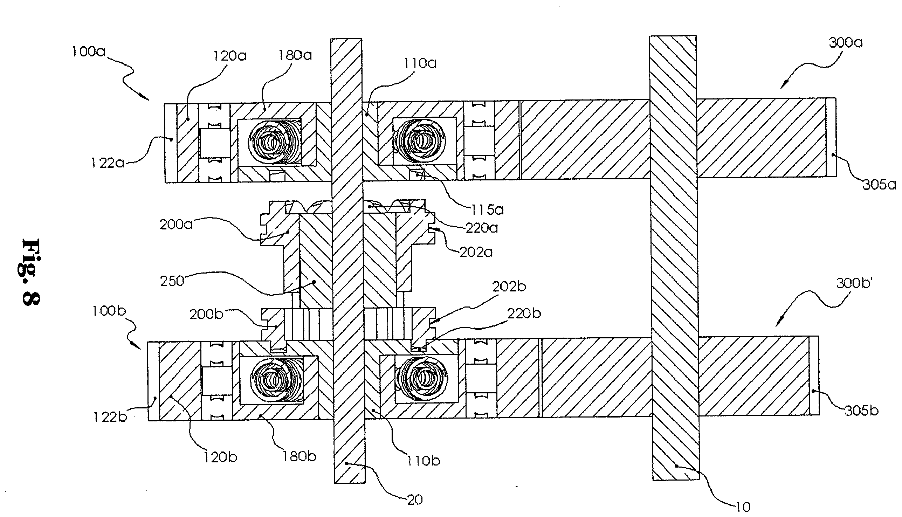

In figure 8 a section cut of an exemplary power transmission system can be seen.

In this figure, the presented exemplary power transmission system has divided freewheel gears 100 supported by the output shaft 10, and gear wheels 300 supported by the input shaft.

Each gear ratio is consisted by an engageable divided freewheel gear 100 and a torque proof fixed to the assigned input shaft 10 gear wheel 300.

The engagement means 122 of the engageable divided freewheel gears are provided as gear teeth and they mesh with the gear teeth 305 of the gear wheels 300.

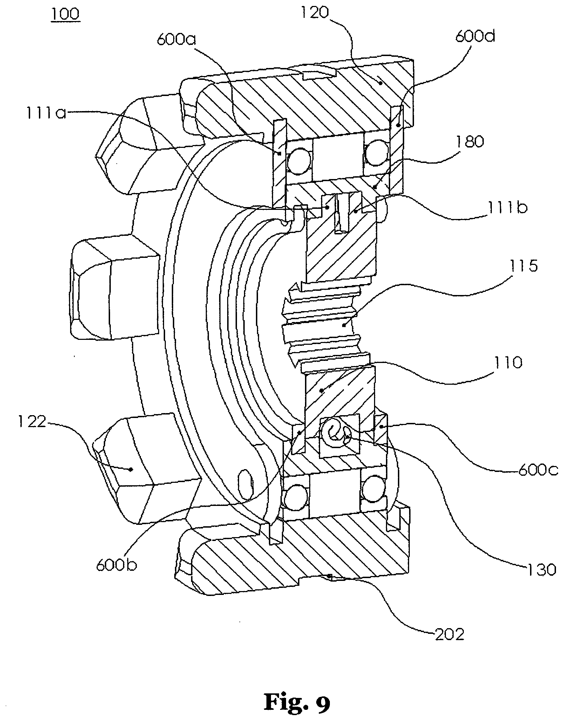

The engagement of the engageable divided freewheel gears 100 takes place with the help of the configuration presented in figure 9.

Figure 9 presents an engagement component, with the layout of the presented engagement component being analogous to the previously described divided freewheel gear.

The external outer part, comprises engagement means 122 in order to engage with the provided engagement means of an engageable gear wheel.

Securing rings 600 are provided in order to axially secure the parts of the engagement component but allow their rotation, with the demonstrated form of securing not being restrictive.

As a person skilled in the art understands, the layout, the operation, the applications and the results of the presented engagement component are analogous to the previously described divided freewheel gear.

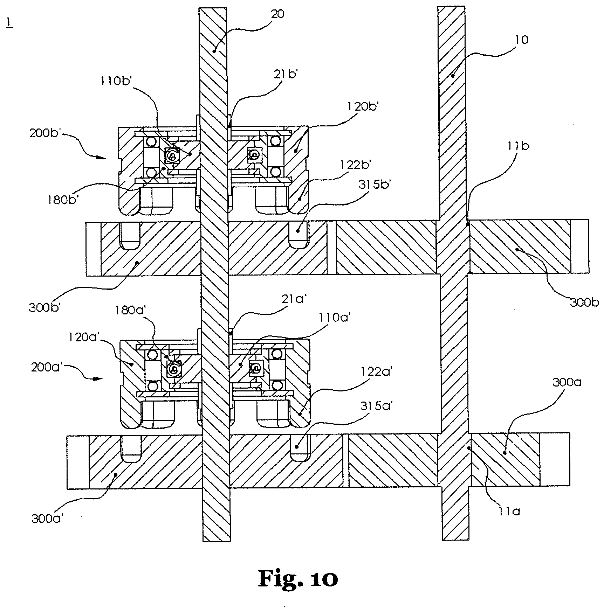

In figure 10, an exemplary power transmission system comprising engagement components as the one presented in the previous figure can be seen.

In this figure, the presented exemplary power transmission system, comprises an input shaft 10, supporting input gear wheels 300a, 300b and an output shaft 20 comprising output gear wheels 300a', 300b'.

The input gear wheels 300a, 300b are provided as torque proof fixed to the input shaft 10 (i.e. the two rotate with the same angular velocity), and output gear wheels 300a', 300b' are provided as being engageable free to rotate.

The torque proof fix with the input shaft 10 takes place with the provided engagement means 11a, 11b.

The engagement of the output gear wheels 300a', 300b' takes place with the help of the provided engagement components 200a', 200b' that are the ones presented in the previous figure.

Since the engagement components 200a', 200b' incorporate the divided freewheel gear configuration, their assigned engageable gear wheels are provided as free to rotate on assign shaft gear wheels (and not as divided freewheel gears), and comprise engagement means 315a', 315b' in order to engage with the respective engagement means 122a', 122b' which are provided by the respective engagement components 200a', 200b'.

The engagement components 200a', 200b' are provided as torque proof fixed to the assigned output shaft 20 but can be axially movable in order to select (or deselect) the desired gear ratio.

The torque proof fix with the assigned output shaft 20, takes place with the provided engagement means 21a, 21b.

From the above it is made clear that a gear wheel or an engagement component can be the described divided freewheel gear.

Therefore as can be seen in all of the above exemplary, and not restrictive configurations, a power transmission system that comprises at least one divided freewheel gear, either as a gear wheel or as an engagement component, achieves a continues power transfer.

In addition it is obvious that the possible alternative configurations and layouts are endless, combining one or more of the presented features of the innovation.

### LIST OF REFERENCES

- 1: power transmission system / gearbox
- 10: input shaft
- 11: engagement means (input shaft)
- 20: output shaft
- 21: engagement means / guiding means (output shaft)
- 100: divided freewheel gear
- 110: inner part
- 111: inner elastic element support
- 115: engagement means (inner part)
- 120: outer ring of freewheel gear
- 121: outer elastic element support
- 122: engagement means (outer part) / gear teething (outer part)
- 128: damping element (outer part)
- 130: first elastic element (softer)
- 140: second elastic element (stiffer)
- 180: inner ring of freewheel gear
- 200: engagement component
- 201: bushing portion (engagement component)
- 202: shifting fork coupling /actuator coupling
- 203: inner engagement means (engagement component)
- 205: actuator coupling member / shifting fork
- 206: shifting fork protrusion
- 210: arms (engagement component)
- 220: engagement means (engagement component)
- 221: engagement surfaces (engagement component)
- 230: dog clutch configuration
- 250: hub
- 251: engagement means (hub)
- 300: gear wheel
- 305: gear teeth
- 315: engagement means (gear wheel)
- 400: bearings (inner)
- 500: bearings (outer)
- 600: secure rings

## Claims

1. A divided freewheel gear for a power transmission system wherein the divided freewheel gear comprises:
an inner part and at least one outer part wherein;
the inner part is at least partially arranged within an outer part, wherein,
the inner part and the at least one outer part have a common rotational axis, wherein;
at least one of the inner or the outer parts comprise a freewheel portion.

2. The divided freewheel gear according to claim 1 , wherein the parts consisting the divided freewheel gear are coupled by means of at least one elastic element, preferably at least one first elastic element and at least one second elastic element, wherein;
the spring constant of the at least one first spring element may be lower than the spring constant of the at least one second elastic element, wherein;
the at least one first elastic element may be longer in relation to the at least one second elastic element and as a result, the at least one second elastic element deforms after a certain deformation of the at least one first elastic element, wherein;
the elastic elements may be positioned in a parallel configuration in relation to each other, wherein;
the elastic elements are received in at least one elastic element compartment formed by the parts consisting the divided freewheel gear, wherein;
the parts are arranged angularly deflectable with respect to each other around the common rotational axis and wherein
the divided freewheel gear may comprise dumping elements.

3. The divided freewheel gear according to any of claims 1 to 2 , wherein ;
the outer part of the divided freewheel gear comprises gear teeth for torque transmission to another gear wheel and wherein ,
the inner part comprises engagement means for being connected with an engagement component.

4. The divided freewheel gear according to any of claims1 to 2 , wherein;
the outer part of the divided freewheel gear comprises engagement means for being connected with another gear wheel and wherein ,
the inner part comprises engagement means for being connected with a shaft in a rotational fix manner.

5. A power transmission system, comprising:
at least one input shaft, supporting input gear wheels;
at least one output shaft, supporting output gear wheels
And an engagement component, wherein;
Each of the gear wheels assign to input shaft, engages with a corresponding gear wheels assign to output shaft, thereby defining a gear ratio, wherein;
at least one of the gear wheels of the input shaft or at least one of the gear wheels of the output shaft of a gear ratio is an engageable free to rotate on assign shaft gear wheel, wherein;
at least one engagement component, is assigned to at least one of the shafts and to at least one of the engageable free to rotate gear wheels, wherein
the at least one engagement component is torque proof engaged with the assigned shaft, configured axially movable along the assigned shaft in order to select / deselect gear ratios, wherein
at least one of the engagement components or at least one of the engageable gear wheels is a divided freewheel gear according to any of claim 3 , 4, wherein;
the engagement means of the at least one engagement component are adapted to engage with / disengage from the engagement means of the at least one of the engageable gear wheels, thereby torque proof fixing / unfixing said parts with the assigned shaft.

6. A power transmission system according to any of the preceding claims, further comprising a control unit, position sensors and measuring instruments taking according measurements and providing them to the control unit, wherein the control unit is adapted to command a gear ratio changing action with the provision of respective commands to the at least one engagement component after assessing and processing the provided data.

7. The power transmission system according to any of the preceding claims, further comprising at least one shifting mechanism with a shift actuator, adapted to axially move the at least one engagement component to select / deselect a gear ratio.

8. A method for operating a power transmission system according to any of claims 5 to 7, the method comprising the following steps:
rotating the input shaft and transferring power to the output shaft by means of a first gear ratio;
commanding a gear ratio changing action from a first gear ratio to a second gear ratio;
axially moving an engagement component, for engaging a second gear ratio and thereby engaging second gear ratio;
after the completion of engagement of the second gear ratio, the second gear ratio starts to handle load;
when the second gear ratio handles all the occurring load disengage first gear ratio;
rotating the input shaft and transferring power to the output shaft by means of a second gear ratio.

9. A vehicle or a device comprising a divided freewheel gear according to any of claims 3 to 4 or a power transmission system according to any of claims 5 to 8.
